(19) **Europäisches Patentamt**

**European Patent Office**

**Office européen des brevets**

(11) **EP 0 925 519 B1**

(12) **FASCICULE DE BREVET EUROPEEN**

(45) Date de publication et mention
de la délivrance du brevet:
**20.03.2002 Bulletin 2002/12**

(21) Numéro de dépôt: **97940211.2**

(22) Date de dépôt: **10.09.1997**

(51) Int Cl.[7]: **G01T 1/00**

(86) Numéro de dépôt international:
**PCT/FR97/01596**

(87) Numéro de publication internationale:
**WO 98/11454 (19.03.1998 Gazette 1998/11)**

(54) **DOSIMETRE X-GAMMA SENSIBLE AUX BASSES ENERGIES**

DOSIMETER FÜR NIEDERENERGETISCHE RÖNTGEN- UND GAMMASTRAHLUNG

LOW ENERGY SENSITIVE X-GAMMA DOSIMETER

(84) Etats contractants désignés:
**BE CH DE ES FR GB IT LI**

(30) Priorité: **11.09.1996 FR 9611084**

(43) Date de publication de la demande:
**30.06.1999 Bulletin 1999/26**

(73) Titulaire: **COMMISSARIAT A L'ENERGIE
ATOMIQUE**
**75015 Paris (FR)**

(72) Inventeurs:
- **BRAMBILLA, Andrea**
  **F-91120 Palaiseau (FR)**
- **POCHET, Thierry**
  **F-78830 Bonnelles (FR)**

(74) Mandataire: **Dubois-Chabert, Guy et al**
**BREVATOME**
**3, rue du Docteur Lanceraux**
**75008 Paris (FR)**

(56) Documents cités:
**EP-A- 0 403 105          GB-A- 2 255 177
US-A- 4 757 202**

- **RUSTGI, S: "EVALUATION OF THE DOSIMETRIC
  CHARACTERISTICS OF A DIAMOND DETECTOR
  FOR THE PHOTON BEAM MEASUREMENTS"
  MEDICAL PHYSICS, vol. 22, no. 5, mai 1995, NY
  USA, pages 567-570, XP000518754**

**Description**

**Domaine technique**

La présente invention concerne un dosimètre X-gamma qui est sensible aux basses énergies.

Par "basse énergie", on entend une énergie comprise dans la gamme allant d'environ 10 keV à environ 50 keV.

L'invention trouve notamment des applications dans le domaine de la radioprotection.

**Etat de la technique antérieure**

La plupart des dosimètres électroniques connus, en particulier les dosimètres portatifs, sont limités dans le domaine des basses énergies pour des raisons liées à la mesure de la dose absorbée par un matériau approprié, dose qui devient très dépendante de ce matériau au dessous d'environ 50 keV.

En effet, la dosimétrie consiste, à partir d'une mesure obtenue généralement à l'aide d'un détecteur à base de silicium, à mesurer la dose théoriquement absorbée par les tissus humains.

A haute énergie, c'est-à-dire à une énergie supérieure à environ 100 keV, la dose déposée dans les tissus humains et la réponse de ce détecteur sont reliées simplement par un facteur de proportionnalité qui dépend peu de l'énergie.

La correction s'avère par conséquent aisée.

En revanche, dès que l'énergie est inférieure à 100 keV, ce facteur commence à dépendre de l'énergie.

Ceci nécessite d'adapter finement la configuration du dosimètre en prévoyant, entre autres choses, l'adjonction de matériaux absorbants devant le détecteur lui-même.

Or, l'atténuation dans ces matériaux absorbants est d'autant plus importante que l'énergie des rayonnements incidents X et gamma est faible.

Par conséquent, le dosimètre ne devient quasiment plus sensible aux rayonnements dont les énergies sont inférieures à 50 keV.

Dans le domaine de la radioprotection, un rayonnement de basse énergie présente pourtant un danger surtout pour le premier millimètre de peau où une dose superficielle très importante peut être déposée.

Il existe donc une forte demande, dans le domaine de la radioprotection, pour le développement de dosimètres dont la limite de basse énergie serait de l'ordre de 10 keV/ voire moins.

Cette demande s'est évidemment accrue avec l'apparition de nouvelles normes européennes en matière de radioprotection.

Notamment dans le cas des dosimètres portatifs, où le détecteur de rayonnements X et gamma utilisé est une photodiode standard à base de silicium, il n'existe pas de solution technique simple à la limitation mentionnée ci-dessus.

Comme on l'a vu plus haut, la limitation en énergie de 50 keV provient essentiellement du fait qu'il est nécessaire d'utiliser des filtres pour corriger la réponse du détecteur en termes de mesure de dose.

Malheureusement, ces filtres jouent le rôle d'absorbants très efficaces à basse énergie, ce qui fait que la plupart des dosimètres connus sont insensibles aux rayonnements de basse énergie.

**Exposé de l'invention.**

La présente invention a pour but de remédier aux inconvénients précédents.

L'invention permet de corriger la réponse en dose absorbée à basse énergie, non pas par l'adjonction de filtres devant un détecteur de rayonnements, mais par l'utilisation de deux détecteurs de rayonnements ayant des réponses différentes en termes de doses.

L'un des détecteurs surestime la dose absorbée à basse énergie par rapport aux tissus humains.

L'autre détecteur, au contraire, sous-estime cette dose absorbée.

Une addition électronique des deux réponses selon une combinaison linéaire optimisée permet de restituer parfaitement (c'est-à-dire à moins de ± 30% près, ce qui est l'incertitude tolérée par les normes actuelles) la dose réelle absorbée par les tissus humains et cela pour une grande gamme d'énergie allant d'environ 10 keV à plusieurs MeV.

Plus généralement l'invention combine de façon déterminée les signaux respectivement fournis par les détecteurs de manière à restituer au mieux une grandeur dosimétrique que l'on veut mesurer.

De façon précise, la présente invention a pour objet un dosimètre X-gamma comprenant :

- des moyens de détection de rayonnements X et gamma, ces moyens de détection étant prévus pour fournir des signaux qui sont des fonctions de la dose absorbée par ces moyens de détection, et

- des moyens électroniques de traitement de ces signaux, ces moyens électroniques de traitement étant prévus pour déterminer une grandeur dosimétrique à partir des signaux,

ce dosimètre étant caractérisé en ce que les moyens de détection comprennent un premier détecteur de rayonnements X et gamma et un deuxième détecteur de rayonnements X et gamma, ces premier et deuxième détecteurs ayant des réponses différentes vis-à-vis de la dose absorbée à basse énergie, le premier détecteur surestimant la dose absorbée à basse énergie par rapport aux tissus humains, le deuxième détecteur sous-estimant la dose absorbée à basse énergie par rapport aux tissus humains, et en ce que les moyens électroniques de traitement sont prévus pour former une combinaison des signaux respectivement fournis par les premier et deuxième détecteurs, cette combinaison étant déterminée de façon à restituer au mieux la grandeur dosimétrique dans une grande gamme d'énergie.

Ladite combinaison peut être une combinaison linéaire, les coefficients de cette combinaison linéaire étant déterminés de façon à restituer au mieux la grandeur dosimétrique que l'on veut mesurer.

On peut également utiliser une combinaison non linéaire des signaux respectivement fournis par les premier et deuxième détecteurs, pour mesurer cette grandeur dosimétrique.

Cette dernière peut être la dose absorbée par les tissus humains.

Selon un premier mode de réalisation particulier du dosimètre objet de l'invention, les moyens électroniques de traitement sont prévus pour restituer au mieux la dose réelle absorbée par les tissus humains de façon globale.

Selon un deuxième mode de réalisation particulier, les moyens électroniques de traitement sont prévus pour restituer au mieux la dose réelle absorbée par les tissus humains pour une profondeur de tissu déterminée.

Dans ce cas, les moyens électroniques de traitement sont par exemple prévus pour restituer au mieux l'équivalent de dose individuel superficiel noté HP(0/07) ou l'équivalent de dose individuel profond noté HP(10).

Ladite grandeur dosimétrique peut aussi être l'équivalent de dose ambiante, le dosimètre étant alors utilisé en tant que radiamètre.

Le premier détecteur est de préférence une photodiode à base de silicium.

Le deuxième détecteur est de préférence un détecteur à base de diamant.

Il est à noter que le diamant présente l'avantage d'avoir un numéro atomique (Z = 6) plus faible que le numéro atomique moyen des tissus humains, ce qui permet à un détecteur à base de diamant de sous-estimer la réponse dosimétrique.

Selon un premier mode de réalisation particulier, les moyens électroniques de traitement comprennent, pour chacun des premier et deuxième détecteurs, une voie de mesure appelée première voie de mesure et comprenant un préamplificateur de courant suivi par un convertisseur analogique-numérique, en vue de mesurer de fortes doses.

Selon un deuxième mode de réalisation particulier de l'invention, les moyens électroniques de traitement comprennent, pour chacun des premier et deuxième détecteurs, une voie de mesure appelée deuxième voie de mesure et comprenant un préamplificateur de charge suivi par un discriminateur, lui-même suivi par un compteur de coups, en vue de mesurer de faibles doses.

Ces deux modes de réalisation particuliers peuvent être combinés l'un à l'autre.

Les moyens électroniques de traitement comprennent alors en outre un commutateur prévu pour envoyer les signaux fournis par les premier et deuxième détecteurs soit vers les premières voies de mesure soit vers les deuxièmes voies de mesure correspondantes, en vue de mesurer soit de fortes doses soit de faibles doses.

**Brève description des dessins**

La présente invention sera mieux comprise a la lecture de la description d'exemples de réalisation donnés ci-après, à titre purement indicatif et nullement limitatif, en faisant référence aux dessins annexés, sur lequels ;

- la figure 1 montre les variations de la dose absorbée par unité de flux en fonction de l'énergie des photons, pour un détecteur à base de silicium (courbe A), un détecteur à base de diamant (courbe B) et les tissus humains (courbe C),
- la figure 2 montre les variations de la dose absorbée par unité de flux en fonction de l'énergie des photons correspondant respectivement à une combinaison linéaire optimisée des réponses de ce détecteur à base de diamant et de ce détecteur à base de silicium (courbe A) et à la réponse des tissus humains (courbe B),
- la figure 3 représente les variations de l'erreur relative entre les réponses combinées de ces détecteurs et la réponse des tissus humains en fonction de l'énergie des photons,
- la figure 4 représente les variations de l'erreur relative entre les réponses combinées de ces détecteurs et la réponse des tissus humains en fonction de l'énergie des photons, dans le cas de la mesure de la dose superficielle HP (0,07),
- la figure 5 est un schéma d'un premier mode de réalisation particulier du dosimètre objet de l'invention, utilisable pour la mesure de fortes doses,

- la figure 6 est une vue schématique d'un autre mode de réalisation particulier de ce dosimètre, utilisable pour la mesure de faibles doses, et
- la figure 7 une vue schématique d'un autre mode de réalisation particulier de ce dosimètre, utilisable pour la mesure de fortes doses et pour la mesure de faibles doses.

**Exposé détaillé de modes de réalisation particuliers**

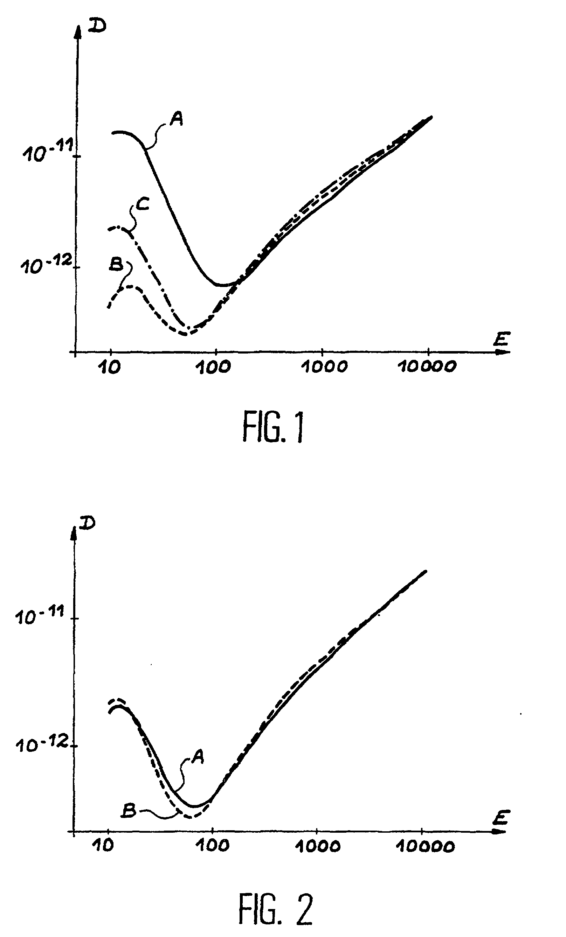

La figure 1 représente les variations de la dose absorbée par unité de flux incident, notée D et exprimée en Gy.cm$^2$, en fonction de l'énergie des photons, notée E et exprimée en keV, pour un détecteur à base de silicium (courbe A), un détecteur à base de diamant (courbe B) et un tissu humain (courbe C).

En comparant les réponses respectives de ces différents matériaux, on voit bien la surestimation à laquelle conduit le silicium et la sous-estimation à laquelle conduit le diamant, à basse énergie.

Conformément à la présente invention, on minimise l'expression ci-dessous sur la gamme d'énergie la plus large possible, allant par exemple de 10 keV à 10 MeV :

$$(1) \qquad a.R(C^*) + b.R(Si) - R(TH).$$

Dans cette expression,

- a et b sont des constantes à déterminer, et
- R(C*), R(Si) et R(TH) représentent respectivement les réponses (en termes de doses absorbées) respectivement données par le détecteur à base de diamant, le détecteur à base de silicium et le tissu humain.

L'expression (1) est minimisée, pour un grand nombre d'énergies de la gamme mentionnée ci-dessus, par exemple par la méthode des moindres carrés.

On obtient ainsi les valeurs a* et b* suivantes respectivement pour les coefficients a et b :

$$(2) \qquad a^* = 9{,}01 \times 10^{-1} \qquad b^* = 8{,}7 \times 10^{-2}.$$

La figure 2 montre le résultat de cette optimisation et permet de comparer la combinaison linéaire optimisée

$$(3) \qquad a^*.R(C^*) + b^*.R(Si)$$

des réponses des deux détecteurs (courbe A) à la réponse du tissu humain (courbe B).

La figure 2 montre que, à partir de 10 keV, on reproduit parfaitement l'absorption de dose dans la limite des incertitudes tolérées.

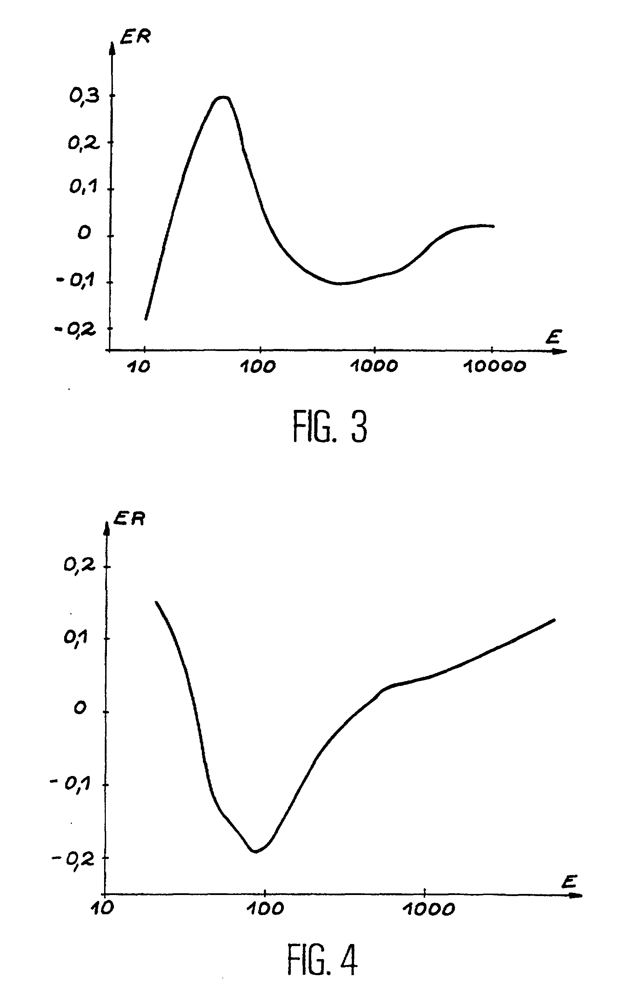

Ceci est illustré par la figure 3 qui montre précisément l'erreur relative de cette combinaison linéaire optimisée par rapport au tissu humain, en fonction de l'énergie des photons E.

Cette erreur relative ER est donnée par l'expression ci-dessous :

$$(4) \qquad \frac{a^*.R(C^*) + b^*.R(Si) - R(TH)}{R(TH)}$$

Les considérations qui précèdent sont relatives à la détermination de la dose réelle absorbée par les tissus humains de façon globale.

Cependant, l'invention n'est pas limitée à la détermination de cette dose absorbée de façon globale.

Elle s'applique également à la détermination de la dose réelle absorbée par les tissus humains pour une profondeur de tissu déterminée.

Dans ce cas, on considère les grandeurs suivantes : l'équivalent de dose individuel superficiel, noté HP(0,07), et l'équivalent de dose indivuel profond, noté HP(10).

Ces deux quantités sont utilisées en radioprotection et représentent respectivement la dose équivalente à 0,07 mm de tissu sous la peau et la dose équivalente à 10 mm de tissu sous la peau.

Ainsi peut-on également chercher des constantes a et b permettant de minimiser l'expression ci-dessous :

$$(5) \qquad a.HP(0,07)_{c^*} + b.HP(0,07)_{si} - HP(0,07)_{TH}.$$

On peut aussi chercher à minimiser l'expression ci-dessous :

$$(6) \qquad a.HP(10)_{c^*} + b.HP(10)_{si} - HP(IO)_{TH}.$$

Dans ces expressions (5) et (6), $HP(0,07)_{c^*}$, $HP(0,07)_{si}$, $HP(0,07)_{TH}$/ $HP(10)_{c^*}$, $HP(10)_{si}$ et $HP(10)_{TH}$ représentent respectivement les réponses en termes de doses équivalentes à 0,07 mm ou à 10 mm de tissu sous la peau pour le détecteur à base de diamant, le détecteur à base de silicium et le tissu humain.

La figure 4 montre les résultats de l'optimisation relative à HP(0,07).

Plus précisément, la figure 4 montre les variations de l'erreur relative ER donnée ci-dessous, en fonction de l'énergie des photons E, pour ce coeffient HP(0,07) :

$$(7) \qquad (a.HP(0/07)_{c^*} + b.HP(0,07)_{si} - HP(0,07)_{TH}) / HP(0,07)_{TH}.$$

Là encore, on voit que l'erreur entre les réponses n'excède pas 20% à partir de 20 keV.

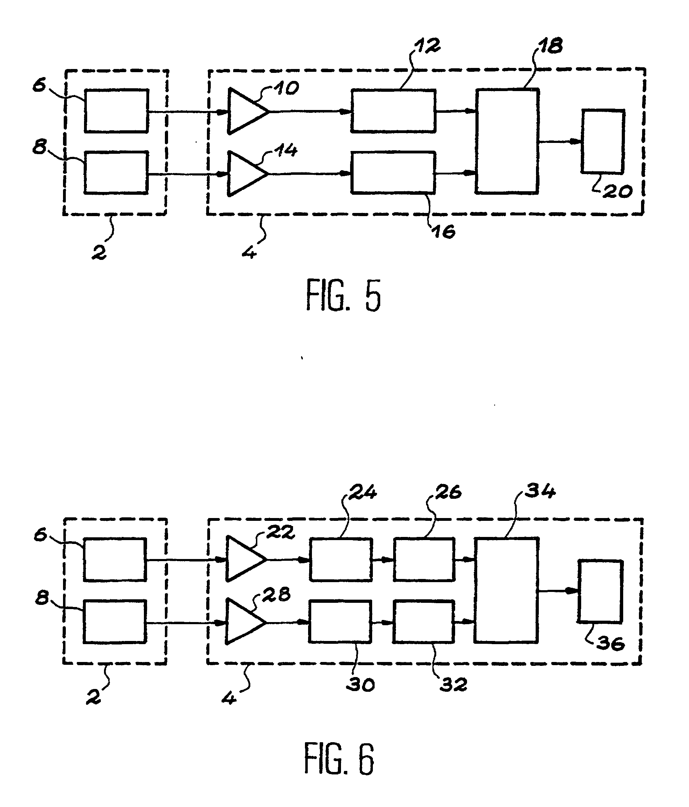

La figure 5 est une vue schématique d'un dosimètre X-gamma conforme à l'invention.

Ce dosimètre de la figure 5 comprend :

- des moyens 2 de détection de rayonnements X et gamma, prévus pour fournir des signaux qui sont des fonctions de la dose absorbée par ces moyens de détection 2, et
- des moyens électroniques 4 de traitement de ces signaux, ces moyens électroniques de traitement 4 étant prévus pour déterminer, à partir de ces signaux, la dose absorbée par les tissus humains.

Conformément à l'invention, les moyens de détection 2 comprennent un photodétecteur à base de silicium 6 et un détecteur à base de diamant 8 regroupés l'un à côté de l'autre.

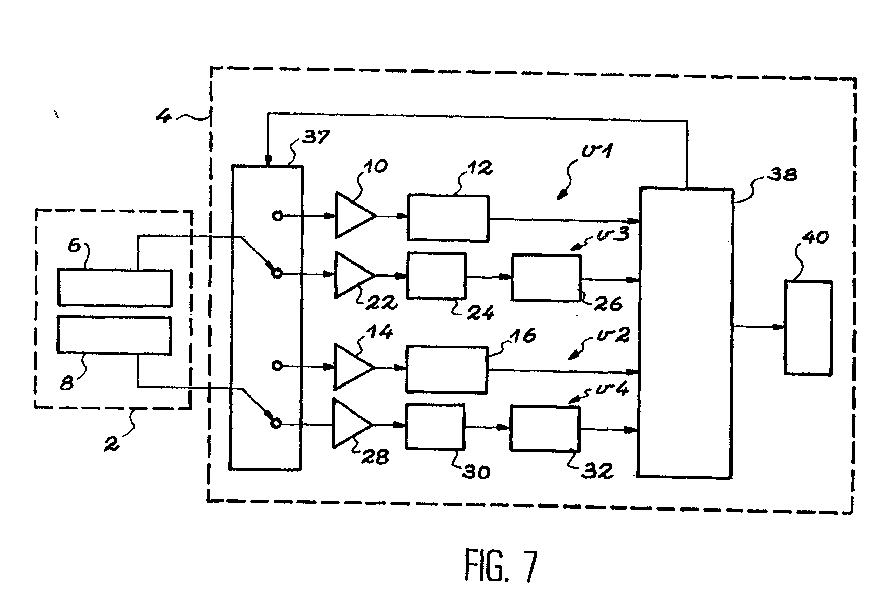

On précise que, sur la figure 5, les moyens d'alimentation en énergie électrique des moyens de détection de rayonnements 2 et des moyens électroniques de traitement 4 ainsi que l'enveloppe du dosimètre ne sont pas représentés et qu'il en est de même sur les figures 6 et 7.

Le dosimètre conforme à l'invention, qui est schématiquement représenté sur la figure 5, est destiné à la mesure de fortes doses absorbées.

A cet effet, les moyens électroniques de traitement 4 comprennent :

- une voie de mesure associée au détecteur 6 et comprenant successivement un préamplificateur de courant 10 et un convertisseur analogique-numérique 12 pour traiter les signaux fournis par ce détecteur 6, et
- une autre voie de mesure associée au détecteur 8 et comprenant successivement un préamplificateur de courant 14 et un convertisseur analogique-numérique 16 pour traiter les signaux fournis par ce détecteur 8.

Les moyens électroniques de traitement 4 comprennent aussi un microprocesseur 18 qui reçoit en entrée les signaux fournis par les convertisseurs analogiques-numériques 12 et 16.

Le microprocesseur 18 a en mémoire les coefficients a* et b* mentionnés plus haut.

En fait, on ajuste de préférence ces coefficients théoriques en fonction des réponses dosimétriques expérimentales obtenues à l'aide de sources ou de générateurs calibrés et en fonction des performances réelles des détecteurs 6 et 8.

Le microprocesseur 18 détermine la somme des signaux traités dans les voies de mesure, pondérée par ces coefficients a* et b*, et permet de remonter à la quantité dosimétrique recherchée.

Les moyens électroniques de traitement 4 comprennent aussi un moyen d'affichage 20, par exemple à cristaux liquides, qui est relié au microprocesseur 18 et permet d'afficher la valeur de la quantité dosimétrique qui a été déterminée par ce microprocesseur 18.

Il est à noter que le dosimètre de la figure 5 pourrait permettre d'obtenir plusieurs quantités dosimétriques telles que HP(10), HP(0,07) ou même la dose dans l'air, en mémorisant plusieurs couples (a,b) adaptés à ces différentes grandeurs.

Le détecteur 6 à base de silicium est une photodiode commercialement disponible auprès de la Société HAMAMATSU, de la Société ORTEC, ou de la Société EURISYS MESURES.

Le détecteur 8 à base de diamant peut être constitué d'une petite couche de diamant artificiel, préparée par exemple selon la technique de dépôt chimique en phase vapeur par micro-ondes, ou une petite couche de diamant naturel de type IIa ou Ib sur deux faces opposées de laquelle on dépose des contacts métalliques ohmiques ou des jonctions bloquantes particulières.

Ce genre de détecteur à base de diamant est commercialement disponible auprès de la Société ASTEX, de la Société NORTON et de la Société DE BEERS.

Le dosimètre conforme à l'invention, qui est schématiquement représenté sur la figure 6, est destiné à la mesure de faibles doses absorbées.

Il comprend encore les moyens de détection 2, comprenant les détecteurs 6 et 8, ainsi que des moyens électroniques de traitement 4.

Ces moyens électroniques de traitement 4 comprennent dans ce cas deux voies de mesure :

- l'une étant associée au détecteur 6 et comprenant successivement un amplificateur de charge 22, un discriminateur 24 et un compteur de coups 26 pour traiter les signaux fournis par ce détecteur 6, et l'autre étant associée au détecteur 8 et comprenant successivement un amplificateur de charge 28, un discriminateur 30 et un compteur de coups 32 pour traiter les signaux fournis par le détecteur 8.

Les compteurs de coups 26 et 32 sont reliés à l'entrée d'un microprocesseur 34 qui a en mémoire les coefficients appropriés de la combinaison linéaire et qui traite les signaux lui parvenant des voies de mesure pour déterminer la dose absorbée recherchée.

Les moyens électroniques de traitement 4 comprennent aussi des moyens d'affichage 36 qui sont reliés au microprocesseur 34 et permettent d'afficher le résultat des mesures.

La figure 7 est une vue schématique d'un autre dosimètre conforme à l'invention permettant de mesurer à la fois de faibles doses absorbées et de fortes doses absorbées.

Ce dosimètre de la figure 7 comprend encore les moyens de détection 2 précédemment mentionnés, comprenant les détecteurs 6 et 8, ainsi que des moyens électroniques de traitement 4.

Ces moyens électroniques de traitement 4 comprennent, dans le cas de la figure 7, quatre voies de mesuré.

On trouve les deux voies de mesure de la figure 5

- l'une référencée v1, comprenant les composants référencés 10 et 12, et
- l'autre, référencée v2, comprenant les composants référencés 14 et 16.

On trouve aussi deux voies de mesure de la figure 6

- l'une, référencée v3, comprenant les composants référencés 22, 24 et 26, et
- l'autre, référencée v4, comprenant les composants référencés 28, 30 et 32.

Les moyens électroniques de traitement 4 du dosimètre de la figure 7 comprennent aussi un commutateur 37 et un microprocesseur 38.

Le commutateur 37 est monté entre les sorties respectives des détecteurs 6 et 8 et les quatre voies de mesure.

Le microprocesseur 38 reçoit en entrée les signaux fournis par les sorties de ces voies de mesure.

De plus, le microprocesseur 38 commande le commutateur 37.

Celui-ci est apte à se trouver dans deux états, à savoir :

- un premier état dans lequel il permet d'envoyer les signaux respectivement fournis par les détecteurs 6 et 8 aux voies de mesure v1 et v2 et
- un deuxième état dans lequel il permet d'envoyer les signaux respectivement fournis par ces détecteurs 6 et 8 aux voies de mesure v3 et v4.

Selon que l'on veut mesurer une faible dose absorbée ou une forte dose absorbée, on commande le microprocesseur 38 pour que celui-ci mette le commutateur 37 dans l'état correspondant.

Le microprocesseur 38 a encore en mémoire les coefficients des combinaisons linéaires appropriées et détermine la dose absorbée recherchée.

Les moyens électroniques de traitement 4 comprennent aussi un moyen d'affichage 40 qui est relié au microprocesseur 38 et prévu pour afficher le résultat des mesures.

La présente invention n'est pas limitée à la mesure de la dose absorbée par les tissus humains. Elle s'applique également à la mesure d'autres grandeurs dosimétriques comme par exemple l'équivalent de dose ambiante. Les moyens électroniques de traitement 4 des figures 5, 6 et 7 sont alors prévus pour restituer au mieux cet équivalent de dose ambiante qui est noté H*. L'invention est alors utilisée en tant que radiamètre.

Dans ce cas on détermine les valeurs respectives a* et b* des coefficients a et b de la combinaison linéaire a.H*(C)+b.H*(Si), valeurs qui permettent de minimiser l'expression

$$a.H^*(C)+b.H^*(Si)-H^*$$

où H*(C), H*(Si) et H* représentent respectivement la réponse du détecteur à base de diamant, la réponse du détecteur à base de silicium et l'équivalent de dose ambiante réel encore appelé « dose équivalente réelle ».

Ces valeurs a* et b* sont mises en mémoire dans le microprocesseur 18 (figure 5) ou 34 (figure 6) ou 38 (figure 7) selon que l'on souhaite utiliser le dispositif de la figure 5 ou 6 ou 7.

De plus la présente invention n'est pas limitée à l'utilisation d'une combinaison linéaire : on peut également utiliser une combinaison non-linéaire des réponses R(C) et R(Si) des détecteurs 6 et 8 c'est-à-dire une fonction F(R(C), R(Si)) de ces réponses, qui n'est pas linéaire.

Certes, dans le cas général, si des rayonnements ayant des énergies différentes interagissent simultanément avec les deux détecteurs 6 et 8, seule la combinaison linéaire est susceptible de fournir une bonne approximation de la grandeur dosimétrique mesurée.

Cependant, dans le cas où les rayonnements incidents sont mono-énergétiques, une combinaison non-linéaire est susceptible de fournir une meilleure réponse à la grandeur dosimétrique mesurée.

A titre purement indicatif et nullement limitatif on cherche à déterminer la dose réelle absorbée par les tissus humains R(TH) dans le cas de tels rayonnements mono-énergétiques et, pour ce faire, on détermine par toute méthode appropriée les valeurs de coefficients a et b permettant de minimiser l'expression

$$aR^n(C) + bR^n(Si) - R(TH)$$

où n est un nombre réel non nul, différent de 1.

## Revendications

1. Dosimètre X-gamma comprenant :

   - des moyens (2) de détection de rayonnements X et gamma, ces moyens de détection étant prévus pour fournir des signaux qui sont des fonctions de la dose absorbée par ces moyens de détection, et
   - des moyens électroniques (4) de traitement de ces signaux, ces moyens électroniques de traitement étant prévus pour déterminer une grandeur dosimétrique à partir des signaux,

   ce dosimètre étant **caractérisé en ce que** les moyens de détection comprennent un premier détecteur (6) de rayonnements X et gamma et un deuxième détecteur (8) de rayonnements X et gamma, ces premier et deuxième détecteurs ayant des réponses différentes vis-à-vis de la dose absorbée à basse énergie, le premier détecteur (6) surestimant la dose absorbée à basse énergie par rapport aux tissus humains, le deuxième détecteur (8) sous-estimant la dose absorbée à basse énergie par rapport aux tissus humains, et **en ce que** les moyens électroniques de traitement (4) sont prévus pour former une combinaison des signaux respectivement fournis par les premier et deuxième détecteurs, cette combinaison étant déterminée de façon à restituer au mieux la grandeur dosimétrique dans une grande gamme d'énergie.

2. Dosimètre selon la revendication 1, **caractérisé en ce que** ladite combinaison est une combinaison linéaire, les coefficients de cette combinaison linéaire étant déterminés de façon à restituer au mieux la grandeur dosimétrique.

3. Dosimètre selon la revendication 1, **caractérisé en ce que** ladite combinaison est une combinaison non linéaire des signaux respectivement fournis par les premier et deuxième détecteurs.

4. Dosimètre selon l'une quelconque des revendications 1 à 3, **caractérisé en ce que** ladite grandeur dosimétrique est la dose absorbée par les tissus humains.

5. Dosimètre selon la revendication 4, **caractérisé en ce que** les moyens électroniques de traitement (4) sont prévus pour restituer au mieux la dose réelle absorbée par les tissus humains de façon globale.

**6.** Dosimètre selon la revendication 4, **caractérisé en ce que** les moyens électroniques de traitement (4) sont prévus pour restituer au mieux la dose réelle absorbée par les tissus humains pour une profondeur de tissu déterminée.

**7.** Dosimètre selon la revendication 6, **caractérisé en ce que** les moyens électroniques de traitement (4) sont prévus pour restituer au mieux l'équivalent de dose individuel superficiel noté HP(0,07).

**8.** Dosimètre selon la revendication 6, **caractérisé en ce que** les moyens électroniques de traitement (4) sont prévus pour restituer au mieux l'équivalent de dose individuel profond noté HP(10).

**9.** Dosimètre selon l'une quelconque des revendications 1 à 3, **caractérisé en ce que** ladite grandeur dosimétrique est l'équivalent de dose ambiante, le dosimètre étant alors utilisé en tant que radiamètre.

**10.** Dosimètre selon l'une quelconque des revendications 1 à 9, **caractérisé en ce que** le premier détecteur est une photodiode à base de silicium (6).

**11.** Dosimètre selon l'une quelconque des revendications 1 à 10, **caractérisé en ce que** le deuxième détecteur est un détecteur à base de diamant (8).

**12.** Dosimètre selon l'une quelconque des revendications 1 à 11, **caractérisé en ce que** les moyens électroniques de traitement comprennent, pour chacun des premier et deuxième détecteurs, une voie de mesure appelée première voie de mesure et comprenant un préamplificateur de courant (10, 14) suivi par un convertisseur analogique-numérique (12, 16), en vue de mesurer de fortes doses.

**13.** Dosimètre selon l'une quelconque des revendications 1 à 12, **caractérisé en ce que** les moyens électroniques de traitement comprennent, pour chacun des premier et deuxième détecteurs, une voie de mesure appelée deuxième voie de mesure et comprenant un préamplificateur de charge (22, 28) suivi par un discriminateur (24, 30), lui-même suivi par un compteur de coups (26, 32), en vue de mesurer de faibles doses.

**14.** Dosimètre selon les revendications 12 et 13, **caractérisé en ce que** les moyens électroniques de traitement comprennent en outre un commutateur (37) prévu pour envoyer les signaux fournis par les premier et deuxième détecteurs soit vers les premières voies de mesure soit vers les deuxièmes voies de mesure correspondantes, en vue de mesurer soit de fortes doses soit de faibles doses.

**Patentansprüche**

**1.** Dosimeter für Röntgen- und Gammastrahlung, umfassend:

- Einrichtungen (2) zur Detektion von Röntgen- und Gammastrahlung, wobei diese Detektionseinrichtungen zum Liefern von Signalen vorgesehen sind, die Funktionen der durch diese Einrichtungen absorbierten Dosen sind, und
- elektronische Einrichtungen (4) zur Verarbeitung dieser Signale, wobei diese elektronischen Verarbeitungseinrichtungen vorgesehen sind, aufgrund der Signale eine dosimetrische Größe zu bestimmen,

**dadurch gekennzeichnet, dass** die Detektionseinrichtungen einen ersten Röntgen- und Gammastrahlungsdetektor (6) und einen zweiten Röntgen- und Gammastrahlungsdetektor (8) umfassen, wobei dieser erste und zweite Detektor unterschiedlich auf die absorbierte niederenergetische Dosis reagieren, indem der erste Detektor (6) die absorbierte niederenergetische Dosis in Bezug auf die menschlichen Gewebe überbewertet und der zweite Detektor (8) die absorbierte niederenergetische Dosis in Bezug auf die menschlichen Gewebe unterbewertet, und dadurch, dass die elektronischen Verarbeitungseinrichtungen (4) vorgesehen bzw. fähig sind, eine Kombination der jeweils vom ersten und zweiten Detektor gelieferten Signale zu bilden, wobei diese Kombination so festgelegt ist, dass sie die dosimetrische Größe in einem großen Energiebereich bestens wiedergibt.

**2.** Dosimeter nach Anspruch 1, **dadurch gekennzeichnet, dass** die genannte Kombination eine lineare Kombination ist und die Koeffizienten dieser linearen Kombination so festgelegt sind, dass sie die dosimetrische Größe in einem großen Energiebereich bestens wiedergibt.

**3.** Dosimeter nach Anspruch 1, **dadurch gekennzeichnet, dass** die genannte Kombination eine nichtlineare Kombination der jeweils durch den ersten und zweiten Detektor gelieferten Signale ist.

**4.** Dosimeter nach einem der Ansprüche 1 bis 3, **dadurch gekennzeichnet, dass** die genannte dosimetrische Größe die durch die menschlichen Gewebe absorbierte Dosis ist.

**5.** Dosimeter nach Anspruch 4, **dadurch gekennzeichnet, dass** die elektronischen Verarbeitungseinrichtungen (4) vorgesehen sind, um die wirkliche, von den menschlichen Geweben global absorbierte Dosis sehr gut wiederzugeben.

**6.** Dosimeter nach Anspruch 4, **dadurch gekennzeichnet, dass** die elektronischen Verarbeitungseinrichtungen (4) vorgesehen sind, um die wirkliche, von den menschlichen Geweben absorbierte Dosis für eine bestimmte Gewebetiefe sehr gut wiederzugeben.

**7.** Dosimeter nach Anspruch 6, **dadurch gekennzeichnet, dass** die elektronischen Verarbeitungseinrichtungen (4) vorgesehen sind, um das Personenoberflächendosisäquivalent, bezeichnet mit HP(0,07), sehr gut wiederzugeben.

**8.** Dosimeter nach Anspruch 6, **dadurch gekennzeichnet, dass** die elektronischen Verarbeitungseinrichtungen (4) vorgesehen sind, um das Personentiefendosisäquivalent, bezeichnet mit HP(10), sehr gut wiederzugeben.

**9.** Dosimeter nach einem der Ansprüche 1 bis 3, **dadurch gekennzeichnet, dass** die genannte dosimetrische Größe das Umgebungsdosisäquivalent ist, wobei das Dosimeter dann als Strahlungsmessgerät benutzt wird.

**10.** Dosimeter nach einem der Ansprüche 1 bis 9, **dadurch gekennzeichnet, dass** der erste Detektor eine Photodiode (6) auf Siliciumbasis ist.

**11.** Dosimeter nach einem der Ansprüche 1 bis 10, **dadurch gekennzeichnet, dass** der zweite Detektor ein Detektor (8) auf Diamantbasis ist.

**12.** Dosimeter nach einem der Ansprüche 1 bis 11, **dadurch gekennzeichnet, dass** die elektronischen Verarbeitungseinrichtungen des ersten und zweiten Detektors im Hinblick auf das Messen starker Dosen einen Messkanal umfassen, erster Messkanal genannt, der einen Stromvorverstärker (10, 14) enthält, gefolgt von einem Analog-Digital-Umsetzer (12, 16).

**13.** Dosimeter nach einem der Ansprüche 1 bis 12, **dadurch gekennzeichnet, dass** die elektronischen Verarbeitungseinrichtungen des ersten und zweiten Detektors im Hinblich auf das Messen schwacher Dosen einen Messkanal umfassen, zweiter Messkanal genannt, der einen Ladungsvorverstärker (22, 28) enthält, gefolgt von einem Diskriminator (24, 30), selbst gefolgt von einem Ereigniszähler (26, 32).

**14.** Dosimeter nach den Ansprüchen 12 und 13, **dadurch gekennzeichnet, dass** die elektronischen Verarbeitungseinrichtungen außerdem einen Umschalter (37) umfassen, um die durch den ersten und den zweiten Detektor gelieferten Signale im Hinblick auf das Messen von entweder starken Dosen oder schwachen Dosen entweder in den ersten Messkanal oder in den zweiten Messkanal einzuspeisen.

**Claims**

**1.** An X-gamma dosimeter, comprising:

- a means (2) for detecting X and gamma radiation, such detection means being provided for supplying signals that are functions of the dose absorbed by said detection means, and
- an electronic means (4) for processing such signals, said electronic processing means being provided for determining a dosimetric quantity from the signals,

said dosimeter being **characterized in that** the detection means comprises a first X and gamma radiation detector (6) and a second X and gamma radiation detector (8), said first and second detectors responding differently in relation to the dose absorbed at low energy, the first detector (6) overestimating the dose absorbed at low energy with regard to human tissues, the second detector (8) underestimating the dose absorbed at low energy with regard to human tissues, and **in that** the electronic processing means (4) is provided for building a combination of signals respectively supplied by the first and second detectors, said combination being determined so as to return in the best possible way the dosimetric quantity within a large energy range.

2. The dosimeter according to claim 1, **characterized in that** said combination is a linear combination, the coefficients of this linear combination being determined so as to return in the best possible way the dosimetric quantity.

3. The dosimeter according to claim 1, **characterized in that** said combination is a non linear combination of the signals respectively supplied by the first and second detectors.

4. The dosimeter according to any of claims 1 to 3, **characterized in that** said dosimetric quantity is the dose absorbed by the human tissues.

5. The dosimeter according to claim 4, **characterized in that** the electronic processing means (4) is provided for returning in the best possible way the actual dose globally absorbed by the human tissues.

6. The dosimeter according to claim 4, **characterized in that** the electronic processing means (4) is provided for returning in the best possible way the actual dose absorbed by the human tissues for a given tissue depth.

7. The dosimeter according to claim 6, **characterized in that** the electronic processing means (4) is provided for returning in the best possible way the equivalent of the superficial individual dose labeled HP (0.07).

8. The dosimeter according to claim 6, **characterized in that** the electronic processing means (4) is provided for returning in the best possible way the equivalent of the deep individual dose labeled HP(10).

9. The dosimeter according to any of claims 1 to 3, **characterized in that** said dosimetric quantity is the equivalent of the ambient dose, the dosimeter being then used as a radiation meter.

10. The dosimeter according to any of claims 1 to 9, **characterized in that** the first detector is a silicon based photodiode (6).

11. The dosimeter according to any of claims 1 to 10, **characterized in that** the second detector is a diamond based detector (8).

12. The dosimeter according to any of claims 1 to 11, **characterized in that** the electronic processing means comprises, for each of the first and second detectors, a measuring channel called first measuring channel and comprising a current preamplifier (10, 14) followed by an analog-to-digital converter (12, 16), with a view to measuring large doses.

13. The dosimeter according to any of claims 1 to 12, **characterized in that** the electronic processing means comprises, for each of the first and second detectors, a measuring channel called second measuring channel and comprising a charge preamplifier (22, 28) followed by a discriminator (24, 30), in turn followed by a pulse counter (26, 32), with a view to measuring small doses.

14. The dosimeter according to claims 12 and 13, **characterized in that** the electronic processing means further comprises a switch (37) provided for sending the signals supplied by the first and second detectors, either to the corresponding first or second measuring channels, with a view to measuring either large doses or small doses.

FIG. 1

FIG. 2

FIG. 3

FIG. 4

FIG. 5

FIG. 6

FIG. 7